# EUROPÄISCHE PATENTSCHRIFT

(11) **EP 1 541 504 B1**
(45) Veröffentlichungstag und Bekanntmachung des Hinweises auf die Patenterteilung: **14.06.2006**
(21) Anmeldenummer: 03028463.2
(22) Anmeldetag: 12.12.2003
(51) Int. Cl.: B65G 17/00, B65G 47/14

(54) **Steilförderer zum Vereinzeln von Massenartikeln, insbesondere Stapel von Flaschenkapseln, sowie entsprechendes Verfahren**
Elevating conveyor for separating mass-produced articles, in partucular stacks of bottle caps, and corresponding method
Convoyeur élévateur pour la séparation des articles de série, particulièrement des piles de capsules de bouteille, et procédure correspondante

(43) Veröffentlichungstag der Anmeldung: 15.06.2005
(73) Patentinhaber: Draht- und Metallwarenfabrik Philipp Schneider GmbH & Co.KG, 55583 Bad Münster-Ebernburg (DE)
(72) Erfinder: Philippsen, Werner, 55543 Bad Kreuznach (DE)
(74) Vertreter: Quermann, Helmut

(56) Entgegenhaltungen:
- DE-A- 10 052 062
- US-A- 4 830 171

## Beschreibung

Die Erfindung betrifft einen Elevator für in Reihe angeordnete, ineinander gesteckte Massenartikel, insbesondere ineinander gesteckte Flaschenkapseln. Sie betrifft ferner ein Verfahren zum Vereinzeln der Reihen von in Reihe angeordneten, ineinander gesteckten Massenartikeln, insbesondere ineinander gesteckten Flaschenkapseln.

Bei ineinander gesteckten Massenartikeln handelt es sich insbesondere um konische Massenartikel, wie Becher, Deckel, Flaschenkapseln. Diese werden üblicherweise in einer Stapeleinheit gelagert, wobei Paletten Verwendung finden, auf denen eine Vielzahl nebeneinander angeordneter Reihen ineinander gesteckter Massenartikel ruhen. Die jeweilige oben liegende Palette stützt sich entweder unmittelbar auf den darunter befindlichen Reihen ineinander gesteckter Massenartikel, oder aber auf der unter der Palette angeordneten Palette unmittelbar ab. Solche Stapeleinheiten sind beispielsweise in der DE 198 44 834 A1 und DE 100 56 422 A1 beschrieben.

Diese Stapeleinheiten mit Massenartikeln, die in einer Vielzahl von Reihen nebeneinander auf Paletten gelagert sind, bedingen, dass nach dem Abarbeiten einer Palette diese zunächst entnommen werden muss, bevor die nächsten Reihen von Massenartikeln von der darunter befindlichen Palette einer Weiterverarbeitungsstation zugeführt werden können.

Aus der Praxis sind Elevatoren bekannt, die Fördermittel zum Fördern von vereinzelt aufgegebenen Flaschenverschlüssen, beispielsweise Kronkorken, aufweisen. Die Flaschenverschlüsse werden in einen Behälter geschüttet und dann vom Fördermittel übernommen, von diesem nach oben gefördert und einer Weiterverarbeitungsstation, insbesondere einer Verschließmaschine für die Flaschen zugeführt.

Von Bedeutung ist bei der Handhabung von in Reihe angeordneten, ineinander gesteckten Massenartikeln, dass sie schonend behandelt werden müssen, somit keinesfalls gequetscht werden dürfen. Dies würde dazu führen, dass sie nicht im Rahmen der Weiterverarbeitung vereinzelt werden können, sondern klemmen. In der Konsequenz bedingt dies den Stillstand der Produktionslinie, bei Flaschenkapseln beispielsweise der Abfüllanlage, da die abgefüllten Flaschen nicht der Weiterverarbeitung, das heißt der Maschine, die die Kapseln auf die Flaschen aufsetzt, zugeführt werden können.

Aufgabe der vorliegenden Erfindung ist es, zunächst einen Elevator zu schaffen, mit dem geschüttete Reihen ineinander gestapelter Massenartikel, bezüglich der Reihen sicher vereinzelt werden können, ohne die Massenartikel zu beschädigen, und diese vereinzelten Reihen zwecks Weiterverarbeitung abzufördern. Es ist ferner Aufgabe ein Verfahren anzugeben, dass es erlaubt, eine Vielzahl von in einem Transportbehälter nebeneinander liegender Reihen ineinander gesteckter Massenartikel, ohne dass zwischen den Reihen eine Palette angeordnet ist, zu vereinzeln und einer Weiterverarbeitungsstation zuzuführen.

Die Erfindung schlägt einen Elevator für in Reihe angeordnete, ineinander gesteckte Massenartikel, insbesondere ineinander gesteckte Flaschenkapseln, mit folgenden Merkmalen vor:
- einen Behälter zu losen Aufnahme einer Vielzahl von Reihen ineinander gesteckter Massenartikel,
- mindestens ein umlaufendes Fördermittel, mit einem unteren Umlenkbereich, der sich innerhalb des Behälters befindet, und einem oberen Umlenkbereich, der oberhalb des Behälters angeordnet ist, wobei das Fördermittels, ausgehend vom unteren Umlenkbereich, auf seiner den Reihen ineinander gesteckter Massenartikel zugewandten Seite, im gesamten unteren Bereich schräg nach oben gerichtet angeordnet ist,
- im Fördermittel gebildete Kammern, wobei jede Kammer der Aufnahme einer Reihe von ineinander gesteckten Massenartikeln dient und sich in ihrer Längsrichtung im wesentlichen horizontal erstreckt.

Der erfindungsgemäße Elevator ist geeignet, die Vielzahl lose im Behälter angeordneter Reihen ineinander gesteckter Massenartikel bezüglich der Reihen zu vereinzeln. Ein wesentliches Merkmal des Elevators besteht hierbei in der Anordnung des umlaufenden Fördermittels in dessen unterem Bereich. Da dieser schräg nach oben gerichtet angeordnet ist, und die jeweilige Kammer somit beim Antreiben des Fördermittels von unten schräg noch oben verfahren wird, werden die Kammern an den Reihen vorbeigeführt, bis eine Reihe ineinander gesteckter Massenartikel nach unten in eine Kammer fällt. Diese in der Kammer aufgenommene Reihe wird dann an den anderen im Behälter befindlichen Reihen ineinander gesteckter Massenartikel vorbeigeführt, sofern der Füllstand des Behälters entsprechend ist. Die Belegung der jeweiligen Kammer ist zufällig. Es kann durchaus sein, dass eine Kammer beim Vorbeibewegen der Kammem an den Reihen ineinander gesteckter Massenartikel im Behälter nicht gefüllt wird oder aber erst sehr spät gefüllt wird. In aller Regel füllen sich aber die Kammern bereits im Bereich des unteren Umlenkbereichs des Fördermittels. Die in den Kammern befindlichen Reihen ineinander gesteckter Massenartikel werden über den oberen Totpunkt des umlaufenden Fördermittels hinausgefördert und dort zwangsläufig ausgegeben, beispielsweise auf ein Magazin einer Weiter verarbeitungsstation oder ein Förderband, insbesondere ein horizontales Förderband, das die jeweilige vereinzelte Reihe abfördert. Hierdurch rutschen die Reihen selbsttätig im Bereich der oberen Umlenkung aus den einzelnen Kammem zwecks direkter Zuführung zur nachgeordneten Verarbeitungsmaschine.

Von besonderer Bedeutung ist es bei dem erfindungsgemäßen Elevator, dass eine störungsfreie Vereinzelung der Reihen auch dann erfolgt, wenn die einzelnen Reihen infolge des Schüttvorgangs und insbesondere bei langen Reihen (d/l ca. 1/30) in drei Ebenen "miteinander verwendelt" im Behälter liegen. Die Reihen müssen somit nicht manuell eingebracht werden, um sicherzustellen, dass sie nebeneinander liegen. Die störungsfreie Füllung wird insbesondere durch den ansteigenden Verlauf des Fördermittels im unteren Bereich ermöglicht. Hierdurch erfolgt eine Kompensation der durch unterschiedliche Füllinhalte entstehenden Belastungen der untersten Reihen. Insbesondere miteinander verwendelte Reihen fallen oft nur teilweise in die Kammern und werden dann durch die darüber liegenden Reihen entweder komplett in die Kammer befördert oder wieder aus derselben gedrückt. Dies gelingt störungsfrei durch den vorgenannten, belastungskompensierenden Umwälzeffekt.

Vorzugsweise erstrecken sich die Kammern in ihrer Längsrichtung horizontal. Im Sinne der Erfindung ist es allerdings durchaus möglich, wenn die Kammern so ausgebildet sind, dass sie sich in ihrer Längsrichtung im wesentlichen horizontal erstrecken. Die Angabe "im wesentlichen horizontal" ist weit auszulegen. So kann der Neigungswinkel gegenüber der Horizontalen durchaus bis ca. 30° betragen. Sind die Kammern gegenüber der Horizontalen geneigt, wird insbesondere eine exakte Anlage eines Endes der jeweiligen Reihe an einem Anschlag des Elevators bewirkt. Diese exakte Positionierung ist von Vorteil für die Weiterverarbeitung der Reihe.

Der schräg nach oben gerichtete Abschnitt des Fördermittels ist vorzugsweise gerade ausgebildet. Einerseits führt die schräg nach oben gerichtete Anordnung des genannten Abschnitts des Förderbands vorteilhaft zu einer Druckentlastung der von den Kammern aufzunehmenden Reihen. Dies wäre nicht der Fall, wenn der Abschnitt horizontal verlaufen würde. In diesem Fall würde die Last aller über der jeweiligen Kammer angeordneten Reihen auf der untersten Reihe liegen, die in eine der vorbeibewegten Kammern hineinfallen soll. Die gerade Ausbildung des schräg nach oben gerichteten Abschnitts des Fördermittels ist unter dem Aspekt der Druckentlastung von Vorteil. Der schräge Abschnitt des Fördermittels ist unter einem Winkel von 20° bis 40°, vorzugsweise 25° bis 35°, insbesondere 30° zur Horizontalen angeordnet. Es ist durchaus denkbar, den schräg nach oben gerichteten Abschnitt des Fördermittels leicht gekrümmt auszubilden, mit einer Krümmung von den im Behälter befindlichen Reihen ineinander gesteckter Massenartikel weg.

Gemäß einer bevorzugten Weiterbildung der Erfindung ist vorgesehen, dass innerhalb des Behälters ein gekrümmter Abschnitt des Fördermittels angeordnet ist, der sich oben an den schräg nach oben gerichteten Abschnitt des Fördermittels anschließt. Dies bedeutet, dass sich an den schräg nach oben gerichteten Abschnitt des Fördermittels ein weiterer Abschnitt, der gekrümmte Abschnitt, anschließt, der steiler verläuft als der darunter befindliche, schräg nach oben gerichtete Abschnitt benachbart des unteren Umlenkbereichs. Der gekrümmte Abschnitt des Fördermittels bedingt eine weitere Druckentlastung, so dass spätestens dort die Füllung der Kammer erfolgt. An den gekrümmten Abschnitt des Fördermittels schließt sich vorzugsweise ein gerader Abschnitt des Fördermittels an, insbesondere ein vertikal angeordneter gerader Abschnitt des Fördermittels. Insbesondere der vertikal angeordnete gerade Abschnitt ermöglicht es, eine große Förderhöhe bei geringer Standfläche des Elevators zu bewerkstelligen. Er kann so ausgestaltet sein, dass auch der obere gerade Abschnitt des Fördermittels mit seinem unteren Ende sich noch innerhalb des Behälters befindet.

Zweckmäßig ist die Länge der jeweiligen Kammer und / oder die Erstreckung des vom Behälter umschlossenen Raums, in Längsrichtung der Kammern gesehen, geringfügig größer als die Länge der jeweiligen Reihe ineinander gesteckter Massenartikel. Es muss aber soviel Längendifferenz zwischen der Reihe ineinander gesteckter Massenartikel und der Länge der jeweiligen Kammer verbleiben, dass ein sicheres Einführen der jeweiligen Reihe in die Kammer gewährleistet ist, auch wenn diese nicht exakt innerhalb des Behälters ausgerichtet ist. Insofern sind die Maße von Behälter und Kammern, sowie deren Orientierung zueinander abzustimmen.

Der untere Umlenkbereich ist insbesondere benachbart einer Wandung des Behälters angeordnet. Vorzugsweise ist, und dies ist insbesondere unter dem Aspekt von Fertigungstoleranzen zu sehen, nur ein geringer Spalt zwischen den Kammerbegrenzungen und der Wandung des Behälters vorgesehen. Hierdurch ist sichergestellt, dass beim Umlenken des Fördermittels im unteren Umlenkbereich keine Reihe zwischen dem Fördermittel und der Wandung des Behälters hindurchfallen kann. Insbesondere, wenn die jeweilige Kammer durch zwei mit dem Fördermittel verbundenen Leisten gebildet ist, kann durch eine geringe Spaltbildung zwischen der Leiste und der Wandung des Behälters eine optimale Aufnahme einer Reihe ineinander gestapelter Massengüter erreicht werden. Dies ist insbesondere unter dem Aspekt zu sehen, dass bei der Umlenkung im unteren Umlenkbereich sich die Leisten voneinander wegspreizen, somit die jeweilige Kammer einen größeren Querschnitt aufweist. Die nachlaufende aufgespreizte Leiste überbrückt vorzugsweise den Abstand zur Wandung des Behälters, mit einem geringen Spalt zum Behälter.

Der Abstand benachbarter Leisten ist vorzugsweise geringfügig größer als der maximale Durchmesser der Reihe ineinander gesteckter Massenartikel. Er sollte aber nur soviel größer sein, dass ein Einführen der Reihe sicher zwischen benachbarter Leisten vonstatten gehen kann. Die Erstreckung der jeweiligen Kammer in Richtung senkrecht zur Förderrichtung und zur Kammerlängsachse sollte etwa so groß sein, wie der maximale Durchmesser der Reihe ineinander gesteckter Massenartikel. Es ist nicht nachteilig, wenn die Reihe teilweise aus der Kammer ragt. Dieses bedingt zusätzlich einen Richteffekt für die Reihen ineinander gestapelter Massengüter, die sich noch im Behälter befinden.

Eine besondere Bedeutung kommt der Gestaltung der Leisten zu. Durch eine Ausbildung der Leisten an der Oberseite und der Unterseite mit einer Neigung wird erreicht, dass die auf der Oberseite liegende Reihe ineinander gesteckter Massenartikel nicht aus der Kammer rollt und beim Überschreiten des oberen Totpunktes des Fördermittels die Reihe ineinander gesteckter Massenartikel die untere Seite kontaktiert und von der dortigen Schräge zwecks Ausgabe aus der Kammer ablaufen kann.

Das Fördermittel kann unterschiedlich gestaltet sein, beispielsweise als Förder band oder als Zahnriemen. Es wird als besonders vorteilhaft angesehen, wenn das Fördermittel als Zahnriemen ausgebildet ist, an denen die Leisten befestigt sind. Insbesondere sind zwei Zahnriemen vorgesehen, an denen die Leisten im Bereich deren beiden Enden befestigt sind. Zweckmäßig sind zusätzlich Führungsmittel für die Zahnriemen zwischen deren Umlenkbereichen vorgesehen. Grundsätzlich sind die Fördermittel beliebig. Es kommen durchaus auch Ketten als Fördermittel in Frage. Hierbei muss es sich nicht um Normketten handeln, sondern es können Sonderketten Verwendung finden.

Bei Verwendung eines Förderbandes ist die jeweilige Kammer insbesondere zwischen den beiden angrenzenden Leisten und dem Förderband gebildet. Bei Berücksichtigung der bevorzugten Gestaltung mit den beiden Zahnriemen, ist die jeweilige Kammer vorzugsweise zwischen den beiden Leisten und einer Wandung des Elevators - somit einer stationären Wandung - gebildet, wobei die Wandung parallel zur Transportrichtung des Fördermittels angeordnet ist. Im oberen Bereich des Fördermittels, hinter dem oberen Totpunkt, ist beispielsweise ein Förderband zur Aufnahme der Reihen ineinander gesteckter Massenartikel oder ein Magazin zur Aufnahme der Reihen ineinander gesteckter Massenartikel angeordnet. - Im Rahmen der Erfindung kann das Fördermittel vollständig die Kammern aufweisen, womit keine stationäre Wandung vorgesehen ist, sonder diese Wandung in das Fördermittel integriert ist.

Vorzugsweise sind Sensormittel vorgesehen, die dem Erfassen der Belegung der jeweiligen Kammer und / oder der Belegung des abfördernden Förderbandes und / oder der Belegung des Magazins dienen. Insbesondere unter dem Aspekt der Kammern ist somit eine Funktionsüberwachung und Füllüberwachung vorgesehen.

Die Aufgabe wird ferner durch ein Verfahren gemäß Anspruch 20 zum Vereinzeln der Reihen von in Reihe angeordneten, ineinander gesteckten Massenartikeln, insbesondere ineinander gesteckten Flaschenkapseln gelöst.

Wesentlich ist somit, dass die vielen Reihen ineinander gesteckter Massenartikel lose in den Behälter übergegeben werden. Dies erfolgt insbesondere durch Schütten der in einem Transportbehälter nebeneinander liegenden Reihen in den Behälter. Selbstverständlich ist die Aufgaberichtung der Reihen nicht beliebig. Die Reihen ineinander gesteckter Massenartikel werden so in den Behälter übergegeben, dass die Längsachse der Reihen im wesentlichen parallel zu den Umlenkachsen des Fördermittels zum Liegen kommt. Diese Achsen liegen parallel zu einer Achse, die quer zur Förderrichtung beim Fördern der vereinzelten Reihe zur Weiterverarbeitungsstation ist.

Weitere Merkmale der Erfindung sind in den Unteransprüchen, der Beschreibung der Figuren und den Figuren selbst dargestellt, wobei bemerkt wird, dass alle Einzelmerkmale und alle Kombinationen von Einzelmerkmalen weitere erfinderische Ausgestaltungen darstellen.

In den Figuren ist die Erfindung anhand eines bevorzugten Ausführungsbeispiels erläutert, ohne hierauf beschränkt zu sein.

Es zeigen:
- Figur 1: einen Mittellängsschnitt durch den erfindungsgemäßen Elevator, gemäß der Linie I-I in Figur 2,
- Figur 2: eine Vorderansicht des Elevators gemäß der Ansicht II in Figur 1,

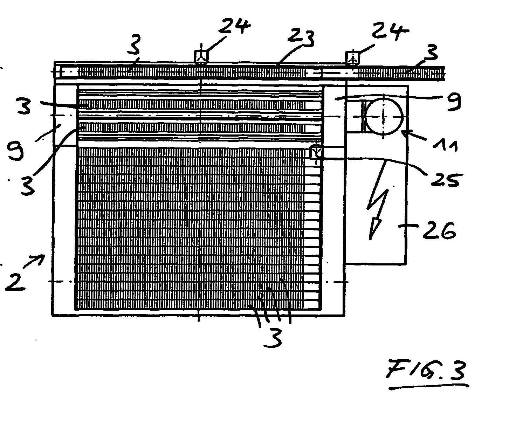

- Figur 3: eine Draufsicht des Elevators gemäß der Ansicht III in Figur 1,
- Figur 4: den Elevator in einer Darstellung gemäß in Figur 1, wobei nur die zum Verständnis der Erfindung wesentlichen Elemente veranschaulicht sind,
- Figur 5: eine vergrößerte Darstellung des in Figur 4 näher bezeichneten Bereichs V des Elevators.

Der Elevator 1 weist einen Behälter 2 zur Aufnahme einer Vielzahl Reihen 3 ineinander gesteckter, konischer Flaschenkapseln 4 auf. Die jeweilige Reihe 4 ist gleich lang ausgebildet, sie besteht beispielsweise aus 150 ineinander gesteckten Flaschenkapseln. Der Behälter 2 besitzt eine rechteckige Grundfläche und seine beiden Seitenwände sind mit der Bezugsziffer 5, die Frontwand mit der Bezugsziffer 6 und die Rückwand mit der Bezugsziffer 8 bezeichnet. Der Innenraum 7 des Behälters 2 dient der Aufnahme einer Vielzahl von Reihen 3 ineinander gesteckter Flaschenkapseln 4. Die Länge der jeweiligen Reihe 3 ist geringfügig geringer als der lichte Abstand der beiden Seitenwände 5 des Behälters 2. Die Reihen 3 werden so in den Behälter 2 eingefüllt, dass sie mit ihrer Längsachse im wesentlichen parallel zur Frontwand 6 positioniert sind.

Im Bereich der Rückwand 8 des Behälters 2, benachbart dessen Seitenwänden 5, weist der Elevator 1 zwei sich vertikal erstreckende Ständer 9 auf. Im Bereich der oberen Enden der Ständer 9 ist in diesen eine Antriebswelle 10 gelagert, die mittels eines an einen der Ständer 9 angeflanschten Elektromotors mit Untersetzungsgetriebe 11 antreibbar ist. In vertikaler Flucht der Antriebswelle 10 ist im Behälter 2 eine Lagerwelle 12 in den Seitenwänden 5 des Behälters 2 gelagert. Unter einem Winkel von 30° zur Horizontalen geneigt, somit unterhalb des Niveaus der Lagerwelle 12, ist benachbart der Frontwand 6 des Behälters 2 eine weitere Lagerwelle 13 in den Seitenwänden 5 des Behälters 2 gelagert. Mit der Antriebswelle 10 sind, im Bereich der beiden Ständer 9, zwei Zahnräder 14 drehfest mit der Antriebswelle 10 verbunden. Entsprechend sind im Bereich der beiden Ständer 9 jeweils zwei Zahnräder 14 drehbar in den Lagerwellen 12 bzw. 13 gelagert. Die im Bereich der Seiten des Elevators 1 angeordneten Zahnräder 14 umschlingen zwei Zahnriemen 15. Mit den beiden Zahnriemen 15 sind, in gleichen Abstand bezogen auf die Förderrichtung der Zahnriemen 15, eine Vielzahl von Leisten 16 verbunden. Diese Leisten 16 sind im Bereich ihrer jeweiligen beiden Stirnseiten in den Seitenwänden 5 des Behälters 2 und den beiden Ständern 9 geführt. Die Führung auf der Vorderseite des Elevators 1 erfolgt, ausgehend von einem geraden unteren Abschnitt 17, über einen gekrümmten Bereich 18 in einen geraden vertikalen Bereich 19. Oben werden die Zahnriemen 15 und damit die Leisten 16 umgelenkt, es schließt sich ein hinterer vertikaler Bereich 20 an, entlang dessen die Leisten 16 gefördert werden, ferner, zwischen den Lagerwellen 12 und 13 ein schräg nach unten geneigter Bereich 21, der parallel zum Bereich 17 verläuft. Entsprechend dem Verlauf der Bereiche 17 bis 21 ist unmittelbar angrenzend an die Leisten 16 in den Bereichen 17, 18 und 19, hinter den Leisten, ein von der Schrägen über die Krümmung in die Vertikale gekrümmtes Blech 22 vorgesehen. Bei der Förderung laufen somit die Leisten 16 in konstantem Abstand an den Blech 22 vorbei.

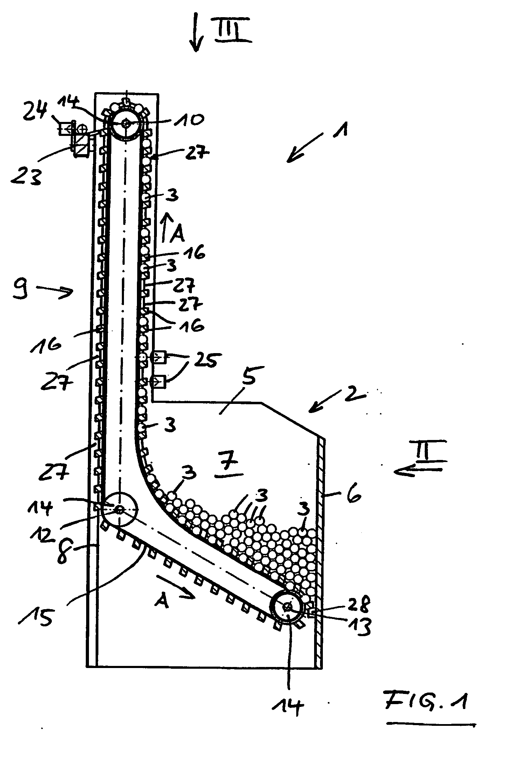

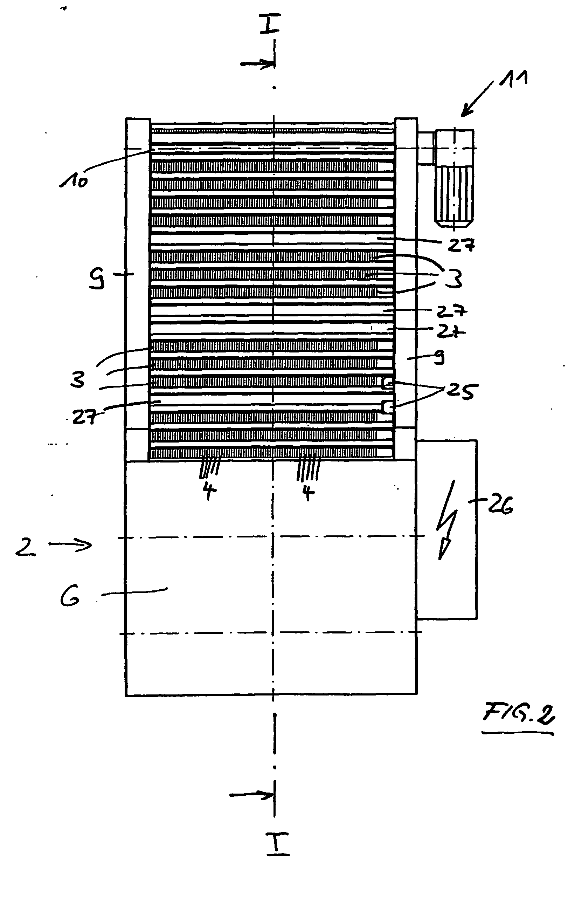

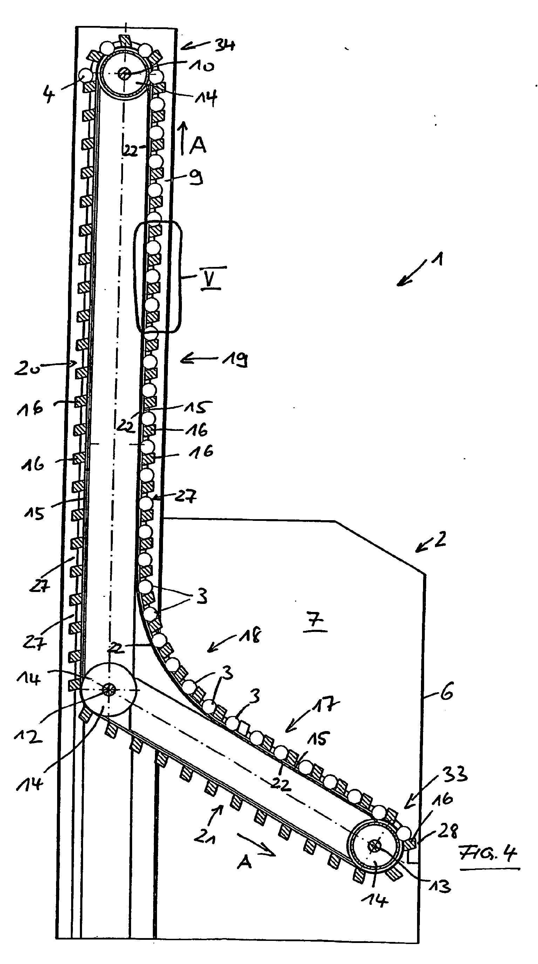

Jede Leiste 16 ist geeignet, bei der Förderung nach oben, eine Reihe 3 ineinander gesteckter Flaschenkapseln 4 zu untergreifen und demzufolge nach oben zu fördern, bis zum Überschreiten des oberen Totpunktes der Fördereinrichtung. In Figur 4 ist veranschaulicht, wie nach Überschreiten des oberen Totpunktes eine Reihe 4 ineinander gesteckter Flaschenkapseln von der nun nach unten geförderten Leiste 16 abgegeben wird. Die Ausgabe erfolgt auf ein parallel zur Leiste 16 angeordnetes Förderband 23, das die ausgegebene Reihe 3 von ineinander gesteckten Flaschenkapseln 4 einer Weiterverarbeitungsstation zuführt. Sensoren 24 erfassen die Übernahmeposition des Förderbandes 23 sowie eine Abförderungsposition, so dass sichergestellt ist, dass eine Reihe 3 ineinander gesteckter Flaschenkapseln 4 nur dann vom Elevator 1 auf das Förderband 23 ausgegeben wird, wenn dieser Bereich des Förderbandes frei ist. Andernfalls wird der Elevator 1 angehalten. Der Elevator seinerseits weist im Bereich der vertikalen Förderstrecke für die Reihen 3 ineinander gesteckter Flaschenkapseln 4 zwei Sensoren 25 auf, die ermitteln, ob auf der jeweiligen Leiste 16 eine Reihe 23 ineinander gesteckter Flaschenkapseln 4 aufliegt. Der Energie- und Steuerschrank 26 des Elevators 1 ist im Bereich einer Seite des Behälters 2 angeordnet. Mittels der Sensoren 25 kann unmittelbar erfasst werden, ob die jeweilige zwischen benachbarten Leisten 16 gebildete Kammer 27 von einer Reihe 3 ineinander gesteckter Flaschenkapseln 4 belegt ist. Wie der Darstellung der Figuren zu entnehmen ist, sind, bezogen auf die Förderseite des Elevators 1, einige Kammern 27 nicht belegt (Figuren 1 und 2).

### Die Wirkungsweise des insoweit beschriebenen Elevators 1 ist wie folgt:

In den Behälter 2 werden die Reihen 3 ineinander gesteckter Flaschenkapseln 4 als Schüttgut aufgegeben. Hierzu sind die in einem Transportbehälter beispielsweise 100, dicht an dicht angeordneten Reihen 3 lose in den Transportbehälter eingelegt, somit ohne die Zwischenlage / Palette, wie es aus dem Stand der Technik bekannt ist. Der Transportbehälter wird entleert, so dass die Reihen 3 ineinander gesteckter Flaschenkapseln 4, wie in der Figur 1 veranschaulicht, mit deren Längsachse parallel zur Frontwand 6 des Behälters 2 zu liegen kommen. Es befinden sich demzufolge eine Vielzahl von Reihen übereinander, die die Fördereinrichtung, quasi den Boden des Behälters 2 kontaktieren. Die Umlaufrichtung der Fördereinrichtung ist mit dem Pfeil A veranschaulicht. Dies bedeutet, dass beim Parallelverschieben der Leisten 16 während des Fördervorganges die Reihen 3 ineinander gesteckter Flaschenkapseln 4 die Tendenz haben, in die zwischen benachbarten Leisten 16 gebildeten Kammern 27 hineinzufallen bzw. hineinzurollen und das Blech 22 zu kontaktieren. Dies erfolgt bevorzugt in dem Bereich des Fördermittels, der der Lagerwelle 13 benachbart ist, somit nahe an der Frontwand 6 des Behälters 2. Sollten die Reihen 3 dort nicht in die jeweilige Kammer 7 gelangen, verbleibt ausreichend Förderweg der Fördereinrichtung, um die jeweilige Reihe aufzunehmen, beispielsweise im gekrümmten Bereich 18. Im ungünstigsten Falle kann es durchaus vorkommen, dass eine Kammer 27 unbelegt bleibt, weil die Schüttung der Reihen 3 im Behälter die interessierende Reihe 3 gehindert hat, in die Kammer zu fallen. Diese Reihe 3 rutscht dann, entsprechend dem abnehmenden Füllstand des Behälters 2 nach unten, bis sie schließlich, zu einem späteren Zeitpunkt, in eine freie Kammer 27 fallen kann und gefördert wird. Damit keine Reihe 3 in den Bereich unterhalb der Fördereinrichtung fallen kann, ist der Elevator so ausgebildet, dass im unteren Umlenkpunkt, benachbart der Lagerwelle 13, die Leiste 16 benachbart der Frontwand 6 des Behälters 2 vorbeigeführt wird. Der zwischen der Leiste 16 und der Frontwand 6 gebildete Spalt 27 ist so klein bemessen, dass keine Reihe 3 durch diesen Spalt 28 fallen kann.

Entsprechend der Anordnung der Lagerwellen 12 und 13 zueinander ist der Bereich 17 der Fördereinrichtung unter einem Winkel von 30° zur Horizontalen angeordnet. Die Kammern 27 erstrecken sich horizontal.

Besondere Bedeutung kommt bei dem Elevator 1 die Gestaltung und Anordnung der Leisten 16 sowie den Abmessungen der Kammer zu: die jeweilige Kammer 27 ist durch zwei mit den Zahnriemen 15 verbundene Leisten 16 gebildet. Der Abstand benachbarter Leisten ist geringfügig größer als der maximale Durchmesser der Reihe 3 ineinander gesteckter Flaschenkapseln 4. Die Erstreckung der jeweiligen Kammer 27 in Richtung senkrecht zur Förderrichtung und zur Kammerlängsachse ist etwa so groß wie der maximale Durchmesser der Reihen 3 ineinander gesteckter Flaschenkapseln 4. Ist der Durchmesser größer, ragen die Reihen 3 somit geringfügig über die vordere Flucht der Leisten hinaus, ergibt sich ein positiver Richteffekt in den Bereichen 17 und 18, da die in den Kammern befindlichen Reihen auf die anderen benachbarten Reihen einwirken, die noch nicht in eine Kammer gefallen sind. Nach hinten ist die jeweilige Kammer 27 durch die Wand 22 begrenzt.

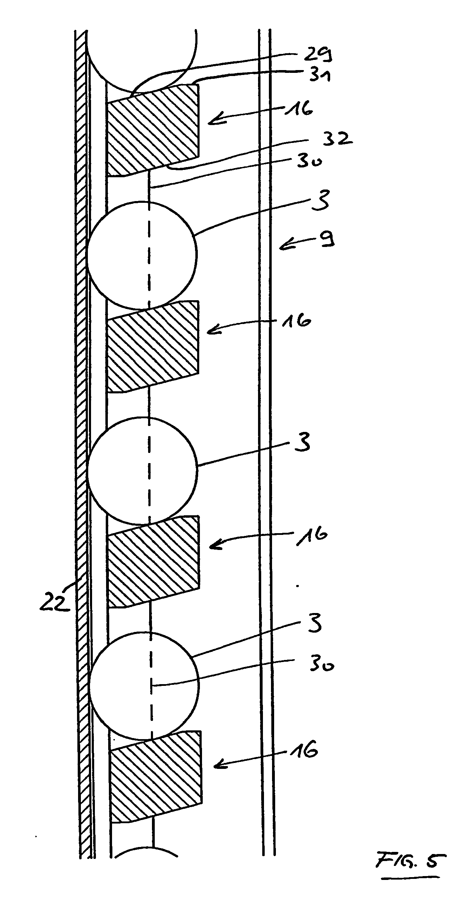

Figur 5 offenbart ein Detail der Leisten 16. So ist die Fläche 29 der Leiste 16, mit der diese die Reihe 3 ineinander gesteckter Flaschenkapseln 4 kontaktiert, eben und verläuft, bezogen auf die jeweilige Kammer 27 unter einem Winkel von ca. 70° zur Förderebene 30 des Fördermittels, wobei diese Förderebene 30 senkrecht zur Blattebene gemäß der Darstellung in Figur 5 verläuft. Des weiteren besitzt die jeweilige Leiste 16 eine vorlaufende, äußere Fläche 31, die senkrecht zur Förderebene des Fördermittels angeordnet ist. Diese Gestaltung bedingt, dass über die Fläche 31 die Reihe 3 im Bereich des Behälters 2 ohne Beschädigung übernommen werden kann und mittels der Fläche 29, die geneigt ist, gegen Rollen aus der Kammer 27 gesichert ist. Des weiteren weist die jeweilige Leiste 16, auf ihrer den Flächen 29 und 31 abgewandten Seite, eine äußere Fläche 32 auf, die, bezogen auf die jeweilige Kammer 27, unter einem Winkel von ca. 100° zur Förderebene des Fördermittels angeordnet ist. Dies bedeutet, und dies ist der Darstellung der Figur 4 oben links zu entnehmen, dass, nach Überschreiten des oberen Totpunktes, die jeweilige Reihe 3 außer Kontakt mit der Fläche 29 gelangt und auf die vorlaufende Fläche 32 der darunter befindlichen Leiste 16 fällt, die demzufolge eine abschüssige Ausgabefläche für die Reihe zum Förderband 23 hin darstellt.

Mit dem erfindungsgemäßen Elevator ist es möglich, lose aufgegebene Reihen 3 ineinander gesteckter Flaschenkapseln 4 automatisch zu vereinzeln und demzufolge ein aufwendiges Trennen einzelner auf Paletten gelagerter Reihen zu vermeiden. Dies ist die Vorraussetzung für eine vollautomatisch arbeitende Zuführanlage für Flaschenkapseln zu einer Weiterverarbeitungsstation, insbesondere einer Kapselaufsetzmaschine für Flaschen.

## Patentansprüche

1. Elevator (1) für in Reihe (3) angeordnete, ineinander gesteckte Massenartikel (4), insbesondere ineinander gesteckte Flaschenkapseln, mit folgenden Merkmalen:
- einem Behälter (2) zur losen Aufnahme einer Vielzahl von Reihen (3) ineinander gesteckter Massenartikel (4),
- mindestens einem umlaufenden Fördermittel (15, 16), mit einem unteren Umlenkbereich (33), der sich innerhalb des Behälters (2) befindet, und einem oberen Umlenkbereich (34), der oberhalb des Behälters (2) angeordnet ist, wobei das Fördermittel (15, 16), ausgehend vom unteren Umlenkbereich (33), auf seiner den Reihen (3) ineinander gesteckter Massenartikel (4) zugewandten Seite, im gesamten unteren Bereich (17) schräg nach oben gerichtet ist,
- im Fördermittel (15, 16) gebildeter Kammern, wobei jede Kammer (27) der Aufnahme einer Reihe (3) von ineinander gesteckten Massenartikeln (4) dient und sich in ihrer Längsrichtung im wesentlichen horizontal erstreckt.

2. Elevator nach Anspruch 1, wobei der schräg nach oben gerichtete Abschnitt (17) des Fördermittels (15, 16) gerade ausgebildet ist.

3. Elevator nach Anspruch 2, wobei der schräge Abschnitt (17) des Fördermittels (15, 16) unter einem Winkel von 20° bis 40°, vorzugsweise 25° bis 35°, insbesondere 30° zur Horizontalen angeordnet ist.

4. Elevator nach einem der Ansprüche 1 bis 3, wobei innerhalb des Behälters (2) ein gekrümmter Abschnitt (18) des Fördermittels (15, 16) angeordnet ist, der sich oben an den schräg nach oben gerichteten Abschnitt (17) des Fördermittels (15, 16) anschließt.

5. Elevator nach Anspruch 4, wobei sich oben an den gekrümmten Abschnitt (18) des Fördermittels (15, 16) ein gerader Abschnitt (19) des Fördermittels (15, 16) anschließt, insbesondere ein vertikal angeordneter gerader Abschnitt (19) des Fördermittels (15, 16) anschließt.

6. Elevator nach Anspruch 5, wobei der obere gerade Abschnitt (19) des Fördermittels (15, 16) mit seinem unteren Ende innerhalb des Behälters (2) angeordnet ist.

7. Elevator nach einem der Ansprüche 1 bis 6, wobei die Länge der jeweiligen Kammer (27) und / oder die Erstreckung des vom Behälter (2) umschlossenen Raumes, in Längsrichtung der Kammern (27) gesehen, geringfügig größer ist als die Länge der jeweiligen Reihe (3) ineinander gesteckter Massenartikel (4).

8. Elevator nach einem der Ansprüche 1 bis 7, wobei der untere Umlenkbereich (33) benachbart einer Wandung (6) des Behälters (2) angeordnet ist.

9. Elevator nach einem der Ansprüche 1 bis 8, wobei die jeweilige Kammer (27) in ihrer Längsrichtung horizontal angeordnet ist.

10. Elevator nach einem der Ansprüche 1 bis 9, wobei die jeweilige Kammer, in Förderrichtung, durch zwei Leisten begrenzt ist.

11. Elevator nach Anspruch 10, wobei der Abstand benachbarter Leisten (16) geringfügig größer ist als der maximale Durchmesser der Reihe (3) ineinander gesteckter Massenartikel (4).

12. Elevator nach einem der Ansprüche 1 bis 11, wobei die Erstreckung der jeweiligen Kammer (27), in Richtung senkrecht zur Förderrichtung (30) und zur Kammerlängsachse, etwa so groß ist wie der maximale Durchmesser der Reihe (3) ineinander gesteckter Massenartikel (4)

13. Elevator nach einem der Ansprüche 10 bis 12, wobei die Fläche (29) der Leiste (16), mit der diese die Reihe (3) ineinander gesteckter Massenartikel (4) kontaktiert, eben und / oder, bezogen auf die jeweilige Kammer (27), unter einem Winkel von 65° bis 85°, insbesondere 70° zur Förder ebene des Fördermittels (15, 16) angeordnet ist.

14. Elevator nach Anspruch 13, wobei die Leiste (16) eine vorlaufende äußere Fläche (31) aufweist, die senkrecht zur Förderebene des Fördermittels (15, 16) angeordnet ist.

15. Elevator nach einem der Ansprüche 10 bis 14, wobei die Leiste (16), auf ihrer der Fläche (29), die die Reihe (3) ineinander gesteckter Massenartikel (4) kontaktiert, abgewandten Seite eine Fläche (32) aufweist, die, bezogen auf die jeweilige Kammer (27), unter einem Winkel von 95° bis 105°, insbesondere 100° zur Förderebene des Fördermittels (15, 16) angeordnet ist.

16. Elevator nach einem der Ansprüche 1 bis 15, wobei die Fördermittel (15, 16) Zahnriemen (15) oder Ketten aufweisen, an denen die Leisten (16) befestigt sind.

17. Elevator nach einem der Ansprüche 1 bis 16, **dadurch gekennzeichnet, dass** die jeweilige Kammer (27) in Förderrichtung durch dieser zugewandte Leisten (16) und rückseitig durch eine Wand (22), die parallel zur Transportrichtung des Fördermittels (15, 16) angeordnet ist, begrenzt wird.

18. Elevator nach einem der Ansprüche 1 bis 17, wobei im oberen Umlenkbereich (34) des Fördermittels (15, 16) ein Förderband (23) zur Aufnahme der Reihen (3) ineinander gesteckter Massenartikel (4), oder ein Magazin zur Aufnahme der Reihen (3) ineinander gesteckter Massenartikel (4) angeordnet ist.

19. Elevator nach einem der Ansprüche 1 bis 18, wobei Sensormittel (23, 24) zum Erfassen der Belegung der jeweiligen Kammern (27) und / oder der Belegung des abfördernden Förderbandes (23) und / oder der Belegung des Magazins vorgesehen sind.

20. Verfahren zum Vereinzeln der Reihen (3) von in Reihe angeordneten, ineinander gesteckten Massenartikeln (4) ineinander gesteckten Flaschenkapseln, mit folgenden Verfahrensschritten:
- Vorsehen eines Elevators nach einem der Ansprüche 1 bis 19,
- loses Übergeben der Reihen (3) in den Behälter (2) zur losen Aufnahme einer Vielzahl von Reihen (3),
- Vereinzeln der Vielzahl im Behälter (2) befindlichen Reihen (3) mittels des nach oben gerichteten Abschnitts (17) des Fördermittels (15, 16),
- Fördern der vereinzelten Reihen (3) zu einer Weiterverarbeitungsstation.

21. Verfahren nach Anspruch 20, wobei das lose Übergeben der Reihen (3) ineinander gesteckter Massenartikel (4) in einen Behälter (2) durch Schütten der in einem Transportbehälter nebeneinander liegenden Reihen (3) in den Behälter (2) erfolgt.

## Claims

1. Elevator (1) for mass produced articles (4) arranged in rows (3) and stacked, in particular stacked bottle caps, having the following features:
- a container (2) for loosely receiving a plurality of rows (3) of stacked mass produced articles (4),
- at least one circulating conveying means (15, 16) with a lower deflecting region (33) situated within the container (2), and an upper deflecting region (34) arranged above the container (2) wherein, starting from the lower deflecting region (33), on its side facing towards the mass produced articles (4) stacked in rows (3) the conveying means (15, 16) is oriented upwardly inclined in the whole lower region (17),
- chambers formed in the conveying means (15, 16), wherein each chamber (27) serves to receive a row (3) of stacked mass produced articles (4) and extends substantially horizontally in its longitudinal direction.

2. Elevator according to claim 1, wherein the upwardly inclined section (17) of the conveying means (15, 16) is formed straight.

3. Elevator according to claim 2, wherein the inclined section (17) of the conveying means (15, 16) is arranged at an angle in the range of 20° to 40°, preferably 25° to 35°, and particularly 30° to the horizontal.

4. Elevator according to one of the claims 1 to 3, wherein arranged within the container (2) is a curved section (18) of the conveying means (15, 16), which adjoins the top of the upwardly inclined section (17) of the conveying means (15, 16).

5. Elevator according to claim 4, wherein a straight section (19) of the conveying means (15, 16) adjoins the top of the curved section (18) of the conveying means (15, 16), in particular a vertically arranged straight section (19) of the conveying means.

6. Elevator according to claim 5, wherein the upper straight section (19) of the conveying means (15, 16) is arranged with its lower end within the container (2).

7. Elevator according to one of the claims 1 to 6, wherein the length of each chamber (27) and/or the extent of the space enclosed by the container (2) is slightly larger, seen in the longitudinal direction of the chambers (27), than the length of each row (3) of stacked mass produced articles (4).

8. Elevator according to one of the claims 1 to 7, wherein the lower deflecting region (33) is arranged adjoining a wall (6) of the container (2).

9. Elevator according to one of the claims 1 to 8, wherein each chamber (27) is arranged horizontally in its longitudinal direction.

10. Elevator according to one of the claims 1 to 9, wherein each chamber is delimited in the conveying direction by two bars.

11. Elevator according to claim 10, wherein the separation of adjoining bars (16) is slightly larger than the maximum diameter of the row (3) of stacked mass produced articles (4).

12. Elevator according to one of the claims 1 to 11, wherein the extent of each chamber (27) in the direction perpendicular to the conveying direction (30) and the chamber longitudinal axis is approximately as large as the maximum diameter of the row (3) of stacked mass produced articles (4).

13. Elevator according to one of the claims 10 to 12, wherein the surface (29) of the bar (16) with which it makes contact with the row (3) of stacked mass produced articles (4) is arranged level and/or, relative to the respective chamber (27), at an angle of 65° to 85°, and particularly 70°, to the conveying plane of the conveying means (15, 16).

14. Elevator according to claim 13, wherein the bar (16) has a preceding outer surface (31) which is arranged perpendicularly to the conveying plane of the conveying means (15, 16).

15. Elevator according to one of the claims 10 to 14, wherein, on its side facing away from the surface (29) which makes contact with the row (3) of stacked mass produced articles (4), the bar (16) has a surface (32) which, relative to each chamber (27) is arranged at an angle of 95° to 105°, in particular 100° to the conveying plane of the conveying means (15, 16).

16. Elevator according to one of the claims 1 to 15, wherein the conveying means (15, 16) has toothed belts (15) or chains to which the bars (16) are attached.

17. Elevator according to one of the claims 1 to 16, **characterised in that** each chamber (27) is delimited in the conveying direction by bars (16) facing towards it and on the rear side by a wall (22) which is arranged parallel to the transport direction of the conveying means (15, 16).

18. Elevator according to one of the claims 1 to 17, wherein in the upper deflection region (34) of the conveying means (15, 16), a conveying belt (23) is arranged for receiving the rows (3) of stacked mass produced articles (4), or a magazine for receiving the rows (3) of stacked mass produced articles (4).

19. Elevator according to one of the claims 1 to 18, wherein sensor means (23, 24) are provided for detecting the occupancy of each chamber (27) and/or the occupancy of the conveying band carrying out the removing (23) and/or the occupancy of the magazine.

20. Method for separating the rows (3) of stacked mass produced articles (4) of stacked bottle caps arranged in rows, having the following steps:
- provision of an elevator according to one of the claims 1 to 19,
- loose transfer of the rows (3) to the container (2) for loose take-up of a plurality of rows (3),
- separation of the plurality of rows (3) situated in the container (2) by means of the upwardly directed section (17) of the conveying means (15, 16),
- conveying of the separated rows (3) to a further processing station.

21. Method according to claim 20, wherein the loose transfer of the rows (3) of stacked mass produced articles (4) into a container (2) takes place by pouring of the rows (3) lying adjacent each other in a transport container into the container (2).

## Revendications

1. Elévateur (1) pour des articles de série (4) emboîtés les uns dans les autres et disposés en rangées (3), en particulier des capsules de bouteille emboîtées les unes dans les autres,
**caractérisé par** :
- un récipient (2) pour recevoir en vrac une multitude de rangées (3) d'articles de série emboîtés les uns dans les autres (4),
- au moins un moyen de convoyage circulaire (15, 16) comprenant une zone de renvoi inférieure (33) située à l'intérieur du récipient (2) et une zone de renvoi supérieure (34) située au-dessus du récipient (2), le moyen de convoyage (15, 16) étant dirigé de façon oblique vers le haut dans toute la zone inférieure (17) sur sa face partant de la zone de renvoi inférieure (33) et tournée vers les rangées (3) d'articles de série emboîtés les uns dans les autres (4), et
- des chambres aménagées dans le moyen de convoyage (15, 16), chaque chambre (27) servant à recevoir une rangée (3) d'articles de masse emboîtés les uns dans les autres (4) et étant essentiellement horizontale dans sa direction longitudinale.

2. Elévateur selon la revendication 1,
la partie (17) du moyen de convoyage (15, 16) dirigée de façon oblique vers le haut étant rectiligne.

3. Elévateur selon la revendication 2,
la partie oblique (17) du moyen de convoyage (15, 16) étant disposée selon un angle de 20° à 40°, de préférence de 25° à 35°, en particulier de 30° par rapport à l'horizontale.

4. Elévateur selon l'une quelconque des revendications 1 à 3,
une partie courbée (18) du moyen de convoyage (15, 16), raccordée en haut à la partie (17) dirigée de façon oblique vers le haut du moyen de convoyage (15, 16), étant disposée à l'intérieur du récipient (2).

5. Elévateur selon la revendication 4,
une partie droite (19) du moyen de convoyage (15, 16), en particulier une partie droite (19) verticale du moyen de convoyage (15, 16) étant raccordée en haut à la partie courbée (18) du moyen de convoyage (15, 16).

6. Elévateur selon la revendication 5,
la partie droite (19) supérieure du moyen de convoyage (15, 16) étant disposée par son extrémité inférieure à l'intérieur du récipient (2).

7. Elévateur selon l'une quelconque des revendications 1 à 6,
la longueur de la chambre (27) correspondante et/ou l'étendue de l'espace entouré par le récipient (2), vus dans la direction longitudinale de la chambre (27), étant légèrement supérieures à la longueur de la rangée (3) correspondante d'articles de série (4) emboîtés les uns dans les autres.

8. Elévateur selon l'une quelconque des revendications 1 à 7,
la zone de renvoi inférieure (33) étant disposée à proximité d'une paroi (6) du récipient (2).

9. Elévateur selon l'une quelconque des revendications 1 à 8,
la chambre (27) correspondante étant disposée horizontalement au niveau de sa direction longitudinale.

10. Elévateur selon l'une quelconque des revendications 1 à 9,
la chambre correspondante étant délimitée, dans la direction de convoyage, par deux barrettes.

11. Elévateur selon la revendication 10,
la distance entre des barrettes voisines (16) étant légèrement supérieure au diamètre maximal de la rangée (3) d'articles de série emboîtés les uns dans les autres (4).

12. Elévateur selon l'une quelconque des revendications 1 à 11, l'étendue de la chambre (27) correspondante étant sensiblement équivalente au diamètre maximal de la rangée (3) d'articles de série emboîtés les uns dans les autres (4) dans la direction perpendiculaire à la direction de convoyage (30) et à l'axe longitudinal de la chambre.

13. Elévateur selon l'une quelconque des revendications 10 à 12,
dans lequel la surface (29) de la barrette (16) en contact avec la rangée (3) d'articles de masse emboîtés les uns dans les autres (4), est plane et/ou ou disposée, par rapport à la chambre correspondante, selon un angle de 65° à 85°, en particulier de 70° par rapport au plan de convoyage du moyen de convoyage (15, 16).

14. Elévateur selon la revendication 13,
dans lequel la barrette (16) présentant une surface extérieure (31) avant est perpendiculaire au plan de convoyage du moyen de convoyage (15, 16).

15. Elévateur selon l'une quelconque des revendications 10 à 14,
dans lequel la barrette (16), sur son côté opposée la surface (29) qui entre en contact avec la rangée (3) d'articles de série emboîtés les uns dans les autres (4), présente une surface (32) qui, rapporté à la chambre correspondante (27), fait un angle de 95° à 105°, en particulier de 100° avec le plan de convoyage du moyen de convoyage (15, 16).

16. Elévateur selon l'une quelconque des revendications 1 à 15,
les moyens de convoyage (15, 16) présentant des courroies dentées (15) ou des chaînes auxquelles sont fixées les baguettes (16).

17. Elévateur selon l'une quelconque des revendications 1 à 16,
**caractérisé en ce que**
dans la direction du convoyage, la chambre correspondante (27) est délimitée par des baguettes (16) tournées vers celle-ci, et à l'arrière par une paroi (22) disposée parallèlement à la direction de transport du moyen de convoyage (15, 16).

18. Elévateur selon l'une quelconque des revendications 1 à 17,
avec dans la zone de renvoi supérieure (34) du moyen de convoyage (15, 16), un convoyeur (23) ou un magasin pour recevoir les rangées (3) d'articles de série emboîtés les uns dans les autres (4).

19. Elévateur selon l'une quelconque des revendications 1 à 18,
des capteurs (23, 24) étant prévus pour détecter l'occupation des chambres correspondantes (27) et/ou l'occupation du convoyeur d'évacuation (23) et/ou l'occupation du magasin.

20. Procédé de séparation des rangées (3) d'articles de série emboîtés les uns dans les autres (4) et disposés en rangées, en particulier de capsules de bouteille emboîtées les unes dans les autres, comprenant les étapes suivantes :
- prévoir un élévateur selon l'une quelconque des revendications 1 à 19,
- transférer en vrac les rangées (3) dans le récipient (2) pour la réception en vrac d'une multitude de rangées (3),
- séparer la multitude des rangées (3) situées dans le récipient (2) au moyen de la partie (17) du moyen de convoyage (15, 16) dirigée vers le haut,
- convoyer les rangées (3) séparées vers une station de traitement ultérieur.

21. Procédé selon la revendication 20, 1
le transfert en vrac des rangées (3) d'articles de série emboîtés les uns dans les autres (4) dans un récipient (2) étant réalisé par installation dans le récipient (2) des rangées (3) juxtaposées dans un récipient de transport.
